# EUROPÄISCHE PATENTSCHRIFT

(11) **EP 0 591 621 B1**
(45) Veröffentlichungstag und Bekanntmachung des Hinweises auf die Patenterteilung: **27.12.1996**
(21) Anmeldenummer: 93110225.5
(22) Anmeldetag: 26.06.1993
(51) Int. Cl.: F15B 15/06

(54) **Dreh-Linear-Einheit**
Rotary-linear-unit
Vérin à mouvements de translation et de rotation

(30) Priorität: 08.09.1992 DE 4229989
(43) Veröffentlichungstag der Anmeldung: 13.04.1994
(73) Patentinhaber: Festo KG, D-73734 Esslingen (DE)
(72) Erfinder: Stoll, Kurt, Dipl.-Ing., D-7300 Esslingen (DE); Wagner, Albrecht, D-7065 Winterbach (DE)
(74) Vertreter: Abel, Martin, Dipl.-Ing.

(56) Entgegenhaltungen:
- DE-A- 3 212 636
- DE-A- 3 247 159
- PATENT ABSTRACTS OF JAPAN vol. 7, no. 55 (M-198)(1200) 5. März 1983 & JP-A-57 200 707 (TORUKAA K.K.) 9. Dezember 1982

## Beschreibung

Die Erfindung betrifft eine Dreh-Linear-Einheit, an deren Vorderseite der Arbeitsabschnitt eines Abtriebsteils herausragt, das mittels eines von einem fluidisch betätigbaren Schwenkflügelmotor gebildeten Drehantriebes und eines Linearantriebes sowohl zu einer Drehbewegung um seine Längsachse als auch zu einer linearen Hubbewegung in Richtung seiner Längsachse antreibbar ist, wobei der Drehantrieb und der Linearantrieb in Richtung der Längsachse des Abtriebsteils derart aufeinanderfolgend angeordnet sind, daß der Drehantrieb der Rückseite der Einheit zugeordnet ist und sich der Linearantrieb axial zwischen dem Drehantrieb und dem Arbeitsabschnitt des Abtriebsteils befindet.

Eine Dreh-Linear-Einheit dieser Art geht aus der JP-A-57/200707 hervor. Sie hat einen im rückseitigen Bereich angeordneten Drehantrieb, der als fluidisch betätigbarer Schwenkflügelmotor ausgestaltet ist, dessen Antriebselement ein in einer Flügelkammer untergebrachter, zu einer Schwenkbewegung antreibbarer Schwenkflügel ist. Über dieser Schwenkflügelmotor läßt sich das Abtriebsteil zu einer Drehbewegung veranlassen. Darüberhinaus ist das Abtriebsteil mit einem Kolben verbunden, der in dem Linearantrieb fluidbetätigt axial hin und her bewegbar aufgenommen ist, so daß sich das Abtriebsteil zusätzlich zu einer Linearbewegung antreiben läßt. Somit kann an dem an der Vorderseite der Linear-Dreh-Einheit herausragenden Arbeitsabschnitt des Abtriebsteils bei Bedarf eine kombinierte Axialbewegung und Drehbewegung abgegriffen werden.

Eine vergleichbare Dreh-Linear-Einheit geht aus der DE-A-32 12 636 hervor. Allerdings ist dort die Anordnung so getroffen, daß sich der Schwenkflügelmotor axial zwischen dem Linearantrieb und dem Arbeitsabschnitt des Abtriebsteils befindet, wobei letzteres die Abtriebswelle des Schwenkflügelmotors koaxial durchsetzt.

Bei beiden bekannten Dreh-Linear-Einheiten sind keine besonderen Maßnahmen getroffen, die eine winkelmäßige Positionierung des Abtriebsteils innerhalb des maximal möglichen Drehbereiches ermöglichen. Eine exakte Positionierung in Zwischenstellungen ist nur möglich, wenn zusätzlich externe Anschläge angebracht werden, die mit dem Arbeitsabschnitt des Abtriebsteils zusammenwirken. Die damit verbundene Handhabung ist relativ umständlich und kann zu einer Gefährdung der einstellenden Person führen.

Es ist daher die Aufgabe der vorliegenden Erfindung, eine Dreh-Linear-Einheit der eingangs genannten Art zu schaffen, die unter Beibehaltung kompakter Radialabmessungen und bei einfacher Bedienbarkeit eine gefahrlose Drehwinkeleinstellung ermöglicht.

Diese Aufgabe wird dadurch gelöst, daß auf der dem Linearantrieb entgegengesetzten Seite des Schwenkflügelmotors eine Drehwinkel-Einstelleinrichtung vorgesehen ist, die außerhalb der den Schwenkflügel des Schwenkflügelmotors enthaltenden Flügelkammer zwischen dem Gehäuse des Schwenkflügelmotors und dessen Abtriebswelle arbeitet.

Auf diese Weise läßt sich ohne Beschädigungsgefahr für den Schwenkflügel eine zuverlässige Drehwinkeleinstellung vornehmen. Die Einstellung ist gefahrlos, da sie weit entfernt vom Arbeitsabschnitt des Abtriebsteils vorgenommen wird. Da die Einstelleinrichtung einen Bestandteil der Dreh-Linear-Einheit bildet, liegt insgesamt eine kompakte Baueinheit vor.

Zweckmäßigerweise erstreckt sich das Abtriebsteil axial durch den Linearantrieb hindurch und ist mit einem dem Arbeitsabschnitt entgegengesetzten Drehantriebsabschnitt in einer Lagerausnehmung aufgenommen, die in der zentral gelegenen Abtriebswelle des Schwenkflügelmotors vorgesehen ist. Auf diese Weise wird das Abtriebsteil drehfest mit der Abtriebswelle gekoppelt und zugleich, eine axiale Hubbewegung ermöglichend, in Querrichtung zuverlässig abgestützt. Man erzielt somit mit geringem Aufwand eine optimale Lagerung des Abtriebsteils auf der dem Arbeitsabschnitt entgegengesetzten Seite.

Von Vorteil ist es ferner, wenn die Abtriebswelle des Schwenkflügelmotors als Hohlwelle gebildet ist, deren Durchgangsöffnung die Lagerausnehmung bildet. In diesem Falle ist die Abtriebswelle von der Rückseite der Dreh-Linear-Einheit her zugänglich, was vor allem dann besonders vorteilhaft ist, wenn das Abtriebsteil eine axial durchgehende Öffnung aufweist. Es ist damit möglich, einer eventuell am Arbeitsabschnitt angeordneten Arbeitseinrichtung, beispielsweise ein Manipulator, über die Kolbenstangenöffnung hindurch Energie zuzuführen, die zu ihrem Betreiben benötigt wird. Man kann die durchgehende Kolbenöffnung beispielsweise als Druckmittel- oder Vakuumkanal oder zum Verlegen von Signalkabeln verwenden.

Zweckmäßigerweise ist das Abtriebsteil auch im Durchdringungsbereich der dem Schwenkflügelmotor entgegengesetzten vorderen Gehäusewand des Linearantriebes linear verschieblich und zugleich drehbar gelagert. Auf diese Weise ergibt sich eine zuverlässige Abstützung des Abtriebsteils an zwei relativ weit voneinander entfernten Stellen, was eine zuverlässige und verkantungsfreie Betriebsweise gewährleistet.

Der Linearmotor ist zweckmäßigerweise fluidbetätigt, wobei das Abtriebsteil einen im Gehäuse des Linearmotors angeordneten und dort zwei Gehäuseräume voneinander abteilenden Kolben umfaßt, der beidseits mit Druckmittel beaufschlagbar ist. zweckmäßigerweise sitzt der Kolben auf einer Abtriebsstange, die einenends unter Bildung des Arbeitsabschnittes aus dem Linearantrieb herausragt und andernends unter Bildung des Drehantriebsabschnittes in den Schwenkflügelmotor hineinragt oder gar durch diesen hindurchtritt. Die Abtriebsstange ist zweckmaßigerweise einstückig ausgebildet.

Vorzugsweise sind die Anschlußmittel für die Fluidversorgung sowohl des Linearantriebes als auch des Schwenkflügelmotors an zentraler Stelle der Dreh-Linear-Einheit vorgesehen, indem sie sich zweckmäßigerweise im Bereich zwischen dem Linearantrieb und dem Drehantrieb befinden.

Nachfolgend wird die Erfindung anhand der beiliegenden Zeichnung näher erläutert. In dieser zeigen:
- Figur 1: eine bevorzugte Bauform der erfindungsgemäßen Dreh-Linear-Einheit in perspektivischer Darstellung längsseits teilweise aufgebrochen,
- Figur 2: die Dreh-Linear-Einheit aus Figur 1 in vereinfachter verkleinerter Darstellung, wobei gestrichelt interne Fluidkanäle gezeigt sind und
- Figur 3: einen Querschnitt durch die Dreh-Linear-Einheit der Figur 1 im Bereich des Drehantriebes gemäß Schnittlinie III-III.

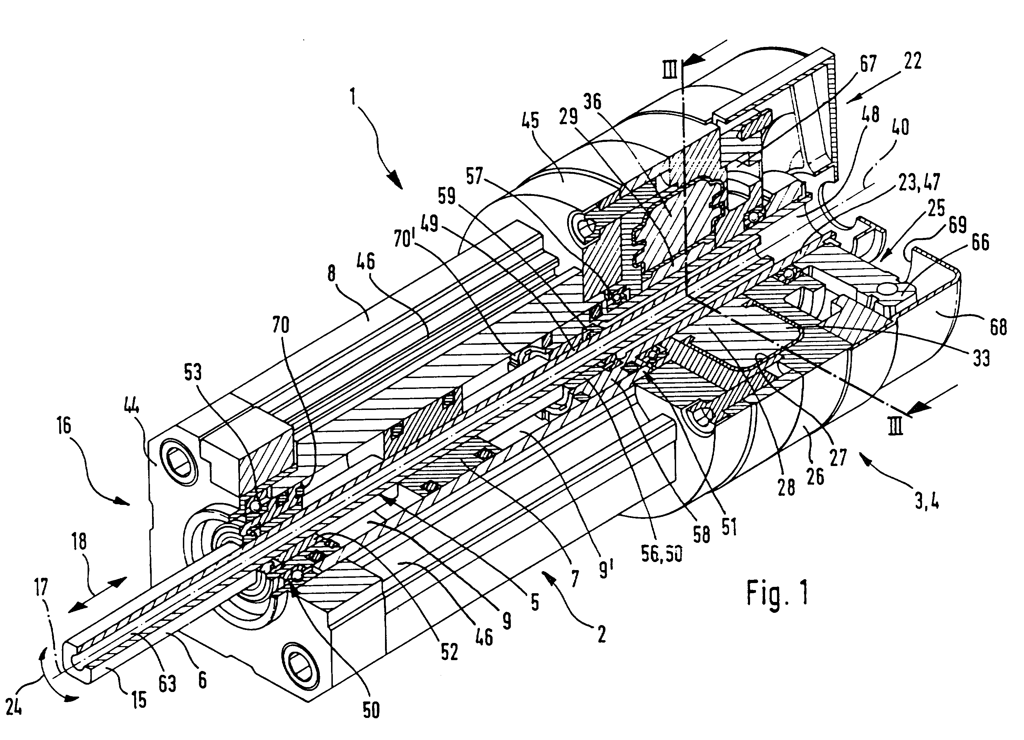

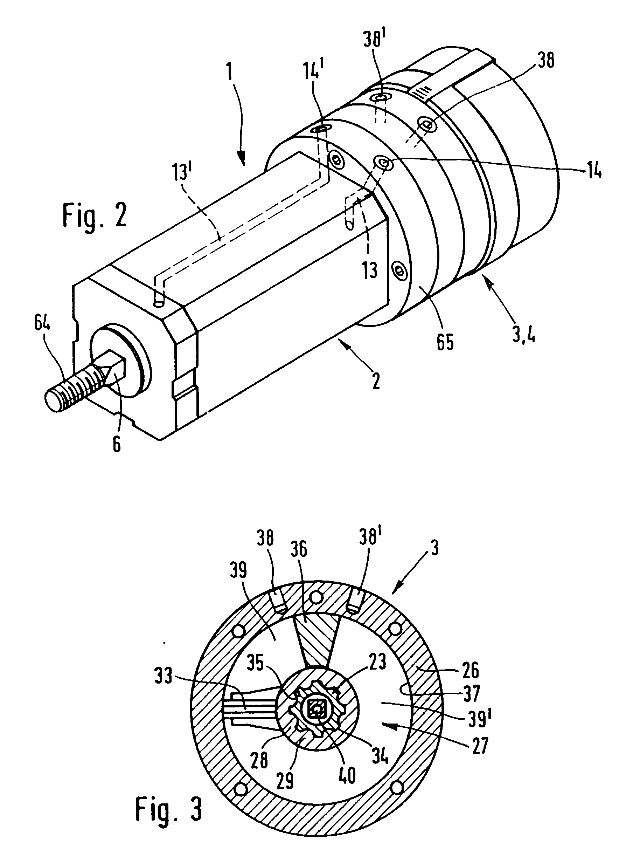

Die in Figur 1 gezeigte Dreh-Linear-Einheit 1 setzt sich im wesentlichen aus dem Linearantrieb 2 und einem als Schwenkflügelmotor 3 ausgebildeten Drehantrieb 4 zusammen. Beide Antriebe 2,4 werden fluidisch, insbesondere durch Druckluft betätigt. Die Dreh-Linear-Einheit 1 besitzt ein Abtriebsteil 5, das sich im wesentlichen aus einer Abtriebsstange 6 und einem auf diese fest aufgezogenen Abtriebskolben 7 zusammensetzt. Letzterer ist axial verschiebbar im Innern des Gehäuses 8 des Linearantriebes 2 angeordnet, wo er zwei Gehäuseräume 9, 9' von einander abteilt, die über in Figur 2 gezeigte gehäuseinterne Druckmittel kanäle 13, 13' mit Anschlußmitteln 14, 14' für nicht näher dargestellte Druckmittelleitungen kommunizieren.

Das Abtriebsteil 5 ragt mit einem Arbeitsabschnitt 15 an einer Stirnseite aus dem Gehäuse 8 heraus. Dieser Bereich bildet die Vorderseite 16 der Dreh-Linear-Einheit 1, die man auch als Arbeitsseite bezeichnen könnte. Auf nicht näher dargestellte Weise kann ein zu bewegendes Bauteil oder eine zu bewegende Einrichtung mit dem Arbeitsabschnitt 15 fest verbunden und anschließend linear bewegt und/oder verschwenkt werden.

Die Längsachse 17 des Abtriebsteils 5 ist gleichzeitig die Längsachse der Abtriebsstange 6. Unter Vermittlung des Linearantriebes 2 läßt sich das Abtriebsteil 5 zu einer linearen hin und her gehenden Hubbewegung 18 in Richtung seiner Längsachse 17 antreiben. Hierzu werden die beiden Gehäuseräume 9, 9' abwechselnd mit Druckmittel beaufschlagt bzw. belüftet, so daß sich die aus dem Abtriebskolben 7 und der Abtriebsstange 6 zusammensetzende Baueinheit linear in die gewünschte Richtung verlagert. Man könnte den Linearantrieb 2 auch als Kolben-Zylinder-Aggregat bezeichnen, wobei die Abtriebsstange 6 die Kolbenstange darstellt.

Der Drehantrieb 4 ist im Bereich der Rückseite 22 der Dreh-Linear-Einheit 1 angeordnet. Er schließt sich auf der dem Arbeitsabschnitt 15 entgegengesetzten Axialseite unmittelbar an den Linearantrieb 2 an, an den er fest angeflanscht ist. Der Linearantrieb 2 und der Drehantrieb 4 bilden somit eine baugruppenartige, fest zuammenhängende Einheit.

Das Abtriebsteil 5 steht in Drehantriebsverbindung mit dem Schwenkflügelmotor 3. Es ist drehfest mit dessen Abtriebswelle 23 gekoppelt. Da diese Abtriebswelle 23 zu einer Drehbewegung um ihre Längsachse antreibbar ist, läßt sich mithin auch das Abtriebsteil 5 zu einer hin und her gehenden Drehbewegung 24 um seine Längsachse 17 antreiben. Beispielsgemäß lassen sich Drehwinkel innerhalb eines Bereiches von 272° verwirklichen, wobei der gewünschte Schwenkwinkel innerhalb dieses vorgegebenen Rahmens mittels einer Drehwinkel-Einstelleinrichtung 25 insbesondere stufenlos justierbar ist. Diese Drehwinkel-Einstelleinrichtung 25 ist beispielsgemäß Bestandteil des Schwenkflügelmotors 3 und befindet sich an dessen dem Linearantrieb 2 entgegengesetzter Axialseite.

Auf den beispielsgemäßen Aufbau des Schenkflügelmotors 3 sei an dieser Stelle nur kurz eingegangen. Der grundsätzliche Aufbau ergibt sich aus der DE 39 41 255 A1, auf die hiermit verwiesen wird. Man erkennt aus Figuren 1 und 3 ein Gehäuse 26 des Schwenkflügelmotors 3, das im wesentlichen hohlzylindrisch ausgebildet ist und im Innern eine Flügelkammer 27 einschließt. Durch das Gehäuse 26 erstreckt sich zentral die Abtriebswelle 23, auf der in der Flügelkammer 27 ein Schwenkflügel 28 sitzt. Selbiger weist vorzugsweise eine die Abtriebswelle 23 umschließende Buchsenpartie 29 und eine von dieser radial abstehende Flügelpartie 33 auf. Die Buchsenpartie 29 ist drehfest mit der Abtriebswelle 23 verbunden, wozu beispielsgemäß an der in der Flügelkammer 27 liegenden Wellenpartie eine Außenverzahnung 34 ausgebildet ist, die mit einer komplementären Innenverzahnung 35 der Buchsenpartie 29 zusammenarbeitet. Der Schwenkflügel 28 liegt dichtend an der Begrenzungsfläche 37 der Flügelkammer 27 an, wobei die Buchsenpartie 29 überdies dichtend mit einer Trennwand 36 zusammenarbeitet, die an einer Umfangsstelle in die im Querschnitt kreisförmige Flügelkammer 27 eingesetzt ist. Die gehäusefeste Trennwand 36 steht mit der Begrenzungsfläche 37 ebenfalls in Dichtkontakt.

An dem Gehäuse 26 sind zwei Anschlußmittel 38, 38' für extern herangeführte Druckmittelleitungen vorgesehen. Es handelt sich bei ihnen beispielsgemäß um Gewindebohrungen, die auf entgegengesetzten Seiten der Trennwand 36 in die Flügelkammer 27 einmünden. Jeweils eines der Anschlußmittel 38, 38' kommuniziert dabei mit einer der beiden Arbeitskammern 39, 39' des Schwenkflügelmotors 3, die in Umfangsrichtung beidseits der Flügelpartie 33 zwischen dieser und der Trennwand 36 eingeschlossen sind. Durch geeignete Zufuhr/Abfuhr von Druckmittel in die / von den Arbeitskammern 39, 39' kann der Schwenkflügel 28 zu einer Drehbewegung um die Längsachse 40 der Flügelkammer 27 veranlaßt werden, wodurch auch die hierzu koaxiale Abtriebswelle 23 eine entsprechende Drehbewegung ausführt. Beispielsgemäß sind Drehbewegungen realisierbar, die in einem maximalen Schwenkwinkel des Schwenkflügels 28 von etwa 272° resultieren.

Das Gehäuse 8 des Linearantriebes 2 besitzt lineare Erstreckung und verfügt im Bereich beider Stirnseiten über Abschlußwände 44, 45. Die rückwärtige Abschlußwand 45 ist beispielsgemäß von dem koaxial angeflanschten Gehäuse 26 des Schwenkflügelmotors 3 gebildet. Die entgegengesetzte, an der Vorderseite 16 befindliche Abschlußwand 44 ist vorzugsweise ein separater lösbar befestigter Gehäusedeckel, wie es aus Figur 1 gut hervorgeht. Im Bereich des peripheren Außenumfanges des Gehäuses 8 können eine oder mehrere sich längs erstreckende Befestigungsnuten 46 vorgesehen sein, in denen sich nicht näher dargestellte Sensoren haltern lassen. Diese sprechen auf eine ebenfalls nicht näher dargestellte und am Abtriebskolben 7 angeordnete Dauermagneteinrichtung an, wenn letztere besagten Sensor im Rahmen der Kolbenbewegung passiert. Auf diese Weise lassen sich abhängig von der Kolbenstellung Signale erzeugen, die auf beliebige Weise verwertbar sind.

Bevorzugt weist das Gehäuse 8 außen eine im wesentlichen quadratische Querschnittskontur auf, wobei an allen vier Seitenflächen mindestens eine Befestigungsnut 46 vorgesehen sein kann.

Die Abtriebswelle 23 des Schwenkflügelmotors 3 ist beispielsgemäß als Hohlwelle 47 ausgebildet. Sie enthält eine axial durchgehende Lagerausnehmung 48, die einerseits zur Rückseite 22 der Dreh-Linear-Einheit 1 und andererseits zum Linearantrieb 2 hin offen ist. Im Bereich des Linearantriebes 2 öffnet sie sich vorzugsweise unmittelbar in den angrenzenden Gehäuseraum 9'.

Ein dem Arbeitsabschnitt 15 axial entgegengesetzter Drehantriebsabschnitt 49 des Abtriebsteils 5 ragt vom Gehäuseraum 9' her koaxial in besagte Lagerausnehmung 48 hinein. Beispielsgemäß ist der Drehantriebsabschnitt 49 der rückseitige Endabschnitt der durchgehenden Abtriebsstange 6, auf die der Abtriebskolben 7 zweckmäßigerweise aufgepreßt ist. Es kann sich bei dem Abtriebskolben 7 um einen ein- oder mehrteiligen Kolben handeln. Mithin erstreckt sich das Abtriebsteil 5 axial durch den Linearantrieb 2 hindurch und ragt vorne wie hinten aus dem Gehäuse 8 des Linearantriebes 2 heraus, wobei der vorne herausragende Abschnitt den Arbeitsabschnitt 15 bildet und der hinten herausragende Abschnitt zum Drehantriebsabschnitt 49 gehört.

Das Abtriebsteil 5 ist im Bereich der Abtriebsstange 6 über zwei einander gegenüber axial beabstandete Lagerstellen 50, 51 gehäuseseitig gelagert und quer abgestützt. Die eine Lagerstelle 50 befindet sich im Durchdringungsbereich der vorderen Abschlußwand 44. Dort ist eine ein- oder mehrteilige Lagerhülse 52 vorgesehen, die die Abtriebsstange 6 koaxial umschließt. Dabei ist die Abtriebsstange 6 in der Lagerhülse 52 axial verschieblich geführt, wobei die Lagerhülse 52 eine Gleithülse sein kann. Die Lagerhülse 52 selbst ist gegenüber der Abschlußwand 44 um ihre Längsachse verdrehbar gelagert. Hierzu kann eine zwischengeschaltete Wälzlagereinrichtung 53 vorgesehen sein.

Die zweite Lagerstelle 51 befindet sich im Bereich der Abtriebswelle 23. An dieser ist eine insbesondere in die Lagerausnehmung 48 eingesetzte hülsenartige Axialführungseinrichtung 56 festgelegt, die den Drehantriebsabschnitt 49 koaxial umschließt. Vorzugsweise handelt es sich auch hier um eine Gleithülse aus verschleißfestem Material mit guten Gleiteigenschaften. Die Abtriebswelle 23 ist ihrerseits bezüglich den sie umgebenden Gehäusepartien drehgelagert. Beispielsgemäß ist eine Wälzlagereinrichtung 57 vorgesehen, die koaxial auf der Abtriebswelle 23 sitzt und sich andererseits am Gehäuse 26 des Schwenkflügelmotors 3 abstützt. Zusätzlich kann die Abtriebswelle 23 mit einem Zentrierabschnitt 58 in den Kreiskontur aufweisenden Gehäuseraum 9' hineinragen. Dies ist beispielsgemäß der Fall, wo der Zentrierabschnitt 58 mit seiner Außenumfangsfläche an der Innenumfangsfläche des Gehäuseraumes 9' mit Gleitspiel anliegt, so daß ohne Beeinträchtigung der Drehbarkeit eine zusätzliche Querabstützung stattfindet. Die Axialführungseinrichtung 56 ist zweckmäßigerweise in dem Zentrierabschnitt 58 aufgenommen. Man erreicht somit, daß die Abtriebswelle 23 im Bereich der Axialführungseinrichtung 56 radial außen gegenüber dem Gehäuse der Dreh-Linear-Einheit drehgelagert ist.

Um zu verhindern, daß Druckmittel aus dem Gehäuseraum 9' über die Lagerausnehmung 48 nach außen tritt, ist in letzteren eine ringförmige Dichtungseinrichtung 59 vorgesehen, die ohne Beeinträchtigung der axialen Relativbewegung dichtend mit der Außenoberfläche des Drehantriebsabschnittes 49 zusammenarbeitet.

Die Axialführungseinrichtung 56 wirkt beispielsgemäß zusätzlich als Drehmitnahmeeinrichtung 60, die das Abtriebsteil 5 unter Gewährleistung der relativen axialen Verschiebbarkeit drehfest mit der Abtriebswelle 23 koppelt. Hierzu ist beispielsgemäß der Drehantriebsabschnitt 49 mit einer unkreisförmigen Außenkontur versehen, und die Innenkontur der Axialführungseinrichtung 56 ist komplementär konturiert. Hierzu besitzt beispielsgemäß der Drehantriebsabschnitt 49 eine quadratische Außenkontur und die Innenkontur der Axialführungseinrichtung 56 ist entsprechend geformt. Konstruktiv besonders einfach ist in diesem Zusammenhang die beim Ausführungsbeispiel verwirklichte Lösung, bei der die axial durchgehende Abtriebsstange 6 insgesamt als Vierkantstange ausgebildet ist, deren Kanten abgerundet sein können. Auf diese Weise erreicht man im Bereich der Axialführungseinrichtung 56 eine formschlüssige Drehmitnahmeverbindung unter gleichzeitiger Gewährleistung einer relativen Axialbewegung zwischen der Abtriebswelle 23 und der durch die Axialführungseinrichtung 56 hindurchtretenden Abtriebsstange 6.

Es versteht sich, daß die Lagerhülse 52 der vorderen Lagerstelle 50 ebenfalls eine zur Außenkontur der Abtriebsstange 6 komplementäre Innenkontur hat, so daß eine exakte Führung gewährleistet ist.

Wie eingangs schon erwähnt, läßt sich das Abtriebsteil 5 im Bereich des Arbeitsabschnittes 15 beispielsweise mit einer Handhabungseinrichtung oder einer sonstigen Einrichtung versehen, die mit Druckluft betätigt wird. Um in diesem Falle auf extern verlaufende Druckmittelleitungen oder -schläuche verzichten zu können, kann die durchgehende Abtriebsstange 6 mit einer axial von Stirnseite zu Stirnseite durchgehenden kanalartigen Öffnung 63 versehen sein. Über diese läßt sich von der Rückseite 22 her Druckmittel zum Arbeitsabschnitt 15 leiten. Auch Kabel oder sonstige für das Betreiben der angesetzten Handhabungseinrichtung erforderliche Mittel können durch die Öffnung 63 hindurch verlegt werden. Im Falle der Fluiddurchführung versieht man die Abtriebsstange 6 im Bereich der beiden Stirnseiten zweckmäßigerweise mit geeigneten Anschlußmitteln, beispielsweise in den Mündungsbereich eingebrachte Gewinde, an denen sich Verbindungsstücke festlegen lassen.

Nutzt man das Abtriebsteil 5 in der beschriebenen Weise zur Übermittlung von Betriebsmedien, so gestaltet man die Anordnung zweckmäßigerweise derart, daß die Abtriebsstange 6 unabhängig von der jeweiligen Hubstellung stets im Bereich der Rückseite 22 über die Dreh-Linear-Einheit 1 vorsteht (nicht dargestellt). Bei dem in Figur 1 gezeigten Ausführungsbeispiel sind die Längenabmessungen hingegen so getroffen, daß die Abtriebsstange 6 zwar in jeder der möglichen Hubstellungen mit der zweiten Lagerstelle 51 zusammenarbeitet, jederzeit jedoch innerhalb der Lagerausnehmung 48 verbleibt und deshalb niemals störend rückseitig herausragt.

Bei dem Ausführungsbeispiel gemäß Figur 2 besteht die Abtriebsstange 6 aus Vollmaterial. Man erkennt überdies an dem Arbeitsabschnitt 15 eine Befestigungseinrichtung 64 für das Anbringen zu bewegender Einrichtungen.

Abgesehen von der Ausführungsform der Abtriebsstange 6 entspricht die in Figur 2 gezeigte Einheit derjenigen aus Figur 1. Man erkennt besonders gut die Anschlußmittel 14, 14' bzw. 38, 38' für die Fluidversorgung des Linearantriebes 2 und des Drehantriebes 4, die an zentraler Stelle zusammengefaßt sind, so daß sie sich sehr einfach mit herangeführten Druckmittelleitungen verbinden lassen. Beispielsgemäß befinden sich die Anschlußmittel 14, 14', 38, 38' in etwa in dem Zwischenbereich zwischen dem Linearantrieb 2 und dem Drehantrieb 4. Die Anschlußmittel 14, 14' des Linearantriebes 2 sind beispielsgemäß an einer Zwischenplatte 65 vorgesehen, die einerseits mit dem Gehäuse 8 und andererseits mit dem Gehäuse 26 verschraubt ist. Man kann durch die zentrale, vom eigentlichen Arbeitsbereich an der Vorderseite 16 entfernte Anordnung der Anschlußmittel jederzeit gefahrlos einen Anschlußwechsel vornehmen.

Der Linearantrieb 2 und der Schwenkflügelmotor 3 sind unabhängig von einander betreibbar. Dadurch lassen sich sowohl Hubbewegungen als auch Drehbewegungen getrennt voneinander realisieren, wie auch überlagerte Hub-Drehbewegungen möglich sind.

An der dem Linearantrieb 2 entgegengesetzten Rückseite des Schwenkflügelmotors 3 ist noch eine Drehwinkel-Einstelleinrichtung 25 vorgesehen. Deren Ausgestaltung entspricht vorzugsweise derjenigen, wie sie in der DE 39 41 255 A1 beschrieben ist. Sie hat den Vorteil, daß sie außerhalb der Flügelkammer 27 zwischen dem Gehäuse 26 und der Abtriebswelle 23 arbeitet, so daß der Schwenkflügel 28 nicht beschädigt wird. Beispielsgemäß ist die Abtriebswelle 23 axial über das Gehäuse 26 hinaus verlängert und trägt dort einen mitbewegten, radial abstehenden Anschlagflügel 66. In dessen Bewegungsbahn sind ein oder zwei nicht näher dargestellte Anschlagelemente angeordnet, die in einer konzentrisch zur Längsachse 40 verlaufenden ringförmigen Halterungsnut 67 des Gehäuses 26 in Umfangsrichtung einstellbar aufgenommen sind. Zur Begrenzung des Drehwinkels läuft der Anschlagflügel 66 auf eines der Anschlagelemente auf. Die gesamte Drehwinkel-Einstelleinrichtung 25 sitzt geschützt unter einer stirnseitig lösbar an das Gehäuse 26 angesetzten Abdeckkappe 68, die mit mindestens einer Zugangsöffnung 69 ausgestattet ist, durch die hindurch sich die Anschlagelemente verstellen lassen.

Durch die vom Arbeitsabschnitt 15 entfernte Anordnung der Drehwinkel-Einstelleinrichtung 25 ist im Betrieb eine gefahrlose Einstellung des jeweils gewünschten Drehwinkels möglich.

Insgesamt liegt somit eine kompakte Baueinheit mit voneinander entkoppelten Antrieben für die Linearbewegung und die Drehbewegung vor. Beispielsgemäß wird die Schwenk- bzw. Drehbewegung über ein in der hohlgebohrten Abtriebswelle 23 eingepreßtes Vierkant-Sinterlager auf eine Vierkantkolbenstange mit durchgehender Bohrung übertragen.

Auf der dem Abtriebskolben 7 zugewandten Innenseite kann sowohl die Lagerhülse 52 als auch der Zentrierabschnitt 58 mit einem Dämpfungsring 70, 70' versehen sein, der den Aufprall des Abtriebskolbens 7 bei Erreichen der Endlage reduziert.

## Patentansprüche

1. Dreh-Linear-Einheit, an deren Vorderseite (16) der Arbeitsabschnitt (15) eines Abtriebsteils (5) herausragt, das mittels eines von einem fluidisch betätigbaren Schwenkflügelmotor (3) gebildeten Drehantriebes (4) und eines Linearantriebes (2) sowohl zu einer Drehbewegung um seine Längsachse (17) als auch zu einer linearen Hubbewegung in Richtung seiner Längsachse (17) antreibbar ist, wobei der Drehantrieb (4) und der Linearantrieb (2) in Richtung der Längsachse (17) des Abtriebsteils (5) derart aufeinanderfolgend angeordnet sind, daß der Drehantrieb (4) der Rückseite (22) der Einheit (1) zugeordnet ist und sich der Linearantrieb (2) axial zwischen dem Drehantrieb (4) und dem Arbeitsabschnitt (15) des Abtriebsteils (5) befindet, dadurch gekennzeichnet, daß auf der dem Linearantrieb (2) entgegengesetzten Seite des Schwenkflügelmotors (3) eine Drehwinkel-Einstelleinrichtung (25) vorgesehen ist, die außerhalb der den Schwenkflügel (28) des Schwenkflügelmotors (3) enthaltenden Flügelkammer (27) zwischen dem Gehäuse (26) des Schwenkflügelmotors (3) und dessen Abtriebswelle (23) arbeitet.

2. Dreh-Linear-Einheit nach Anspruch 1, dadurch gekennzeichnet, daß sich das Abtriebsteil (5) axial durch den Linearantrieb (2) hindurch erstreckt und mit einem Drehantriebsabschnitt (49) in einer Lagerausnehmung (48) der Abtriebswelle (23) des Schwenkflügelmotors (3) aufgenommen ist, wobei der Drehantriebsabschnitt (49) bezüglich der Abtriebswelle (23) drehfest und axial bewegbar abgestützt ist.

3. Dreh-Linear-Einheit nach Anspruch 2, dadurch gekennzeichnet, daß die Abtriebswelle (23) als Hohlwelle (47) ausgebildet ist, deren Durchgangsöffnung die Lagerausnehmung (48) bildet.

4. Dreh-Linear-Einheit nach Anspruch 2 oder 3, dadurch gekennzeichnet, daß der Drehantriebsabschnitt (49) eine unkreisförmige Außenkontur besitzt und von einer mit komplementärer Innenkontur ausgebildeten Axialführungseinrichtung (56) umschlossen wird, die abtriebswellenfest angeordnet ist und gleichzeitig als Drehmitnahmeeinrichtung (60) zwischen der Abtriebswelle (23) und dem Abtriebsteil (5) fungiert.

5. Dreh-Linear-Einheit nach Anspruch 4, dadurch gekennzeichnet, daß zumindest der Drehantriebsabschnitt (49) des Abtriebsteils (5) eine quadratische Außenkontur besitzt, wobei die Innenkontur der Axialführungseinrichtung (56) hierzu passend konturiert ist.

6. Dreh-Linear-Einheit nach einem der Ansprüche 2 bis 5, dadurch gekennzeichnet, daß das Abtriebsteil (5) eine axial durchgehende Abtriebsstange (56) enthält, die einenends den Arbeitsabschnitt (15) und andernends den Drehantriebsabschnitt (49) bildet und die insbesondere als Vierkantstange ausgebildet ist.

7. Dreh-Linear-Einheit nach einem der Ansprüche 3 bis 6, dadurch gekennzeichnet, daß das Abtriebsteil (5) eine axial durchgehende Öffnung (63) aufweist, die von der Rückseite (22) der Einheit (1) her zugänglich ist.

8. Dreh-Linear-Einheit nach einem der Ansprüche 1 bis 7, dadurch gekennzeichnet, daß das Abtriebsteil (5) im Durchdringungsbereich der vorderen Abschlußwand (44) des Gehäuses (8) des Linearantriebes (2) linear beweglich und drehbar gelagert ist.

9. Dreh-Linear-Einheit nach einem der Ansprüche 4 bis 8, dadurch gekennzeichnet, daß die Abtriebswelle (23) des Schwenkflügelmotors (3) im Bereich der Axialführungseinrichtung (56) radial außen gegenüber dem Gehäuse der Einheit (1) drehgelagert ist.

10. Dreh-Linear-Einheit nach einem der Ansprüche 1 bis 9, dadurch gekennzeichnet, daß der Linearantrieb (2) fluidbetätigt ist, wobei das Abtriebsteil (5) einen im Gehäuse (8) des Linearantriebes (2) angeordneten und insbesondere beidseits fluidbeaufschlagbaren Abtriebskolbens (7) umfaßt.

11. Dreh-Linear-Einheit nach Anspruch 10, dadurch gekennzeichnet, daß im Bereich der vorderen Abschlußwand (44) des Linearantriebes (2) eine drehbar gelagerte Lagerhülse (52) vorgesehen ist, die von dem Abtriebsteil (5) axial verschiebbar durchsetzt wird und auf deren dem Abtriebskolben (7) zugewandten Innenseite der Abtriebskolben (7) bei Erreichen der zugeordneten Endlage aufprallen kann.

12. Dreh-Linear-Einheit nach Anspruch 10 oder 11, dadurch gekennzeichnet, daß im Zwischenbereich zwischen dem Linearantrieb (2) und dem Schwenkflügelmotor (3) gehäuseseitig Anschlußmittel (14,14') vorgesehen sind, die über interne Kanäle (13,13') zu den vom Abtriebskolben (7) abgeteilten Gehäuseräumen (9,9') des Linearantriebes (2) führen und den Anschluß externer Druckmittelleitungen ermöglichen.

13. Dreh-Linear-Einheit nach Anspruch 12, dadurch gekennzeichnet, daß die fluidischen Anschlußmittel (14,14') des Linearantriebes (2) in der Nachbarschaft der fluidischen Anschlußmittel (38,38') des Schwenkflügelmotors (3) vorgesehen sind.

14. Dreh-Linear-Einheit nach einem der Ansprüche 1 bis 13, dadurch gekennzeichnet, daß der Linearantrieb (2) und der Schwenkflügelmotor (3) unabhängig voneinander betreibbar sind.

## Claims

1. Rotary linear unit with, extending from the front face (16) of the operating section (15), an output member (5) driveable by means of a rotary drive (4), formed by a fluid-actuable swinging vane motor (3), and a linear drive (2), both to a rotary movement around its longitudinal axis (17) and also to a linear stroke in the direction of its longitudinal axis (17), wherein the rotary drive (4) and the linear drive (2) are so arranged consecutively in the direction of the longitudinal axis (17) of the output member (5) that the rotary drive (4) is assigned to the rear (22) of the unit (1), and the linear drive (2) is located axially between the rotary drive (4) and the operating section (15) of the output member (5), characterized in that, provided on the side of the swinging vane motor (3) opposite the linear drive (2) is a rotational angle adjustment device (25) which operates outside the vane chamber (27) containing the swinging vanes (28) of the swinging vane motor (3) between the housing (26) of the swinging vane motor (3) and its output shaft (23).

2. Rotary linear unit according to claim 1, characterized in that the output member (5) extends axially through the linear drive (2) and is held by a rotary drive section (49) in a bearing recess (48) of the output shaft (23) of the swinging vane motor (3), while the rotary drive section (49) is supported torsionally fixed relative to the output shaft (23) and axially moveable.

3. Rotary linear unit according to claim 2, characterized in that the output shaft (23) is in the form of a hollow shaft (47), the through opening of which forms the bearing recess (48).

4. Rotary linear unit according to claim 2 or 3, characterized in that the rotary drive section (49) has a non-circular external contour and is surrounded by an axial guidance arrangement (56) with complementary internal contour, mounted firmly to the output shaft and simultaneously acting as rotary carrier element (60) between the output shaft (23) and the output member (5).

5. Rotary linear unit according to claim 4, characterized in that at least the rotary drive section (49) of the output member (5) has a square external contour, while the internal contour of the axial guidance arrangement (56) has a contour matching the former.

6. Rotary linear unit according to any of claims 2 to 5, characterized in that the output member (5) contains an axial through operating rod (56) which at one end forms the operating section (15) and at the other end forms the rotary drive section (49) and is in particular in the form of a rectangular bar.

7. Rotary linear unit according to any of claims 3 to 6, characterized in that the output member (5) has an axial through opening (63) which is accessible from the rear (22) of the unit (1).

8. Rotary linear unit according to any of claims 1 to 7, characterized in that the output member (5) is mounted so as to be linearly moveable and pivotable in the penetration zone of the front end wall (44) of the housing (8) of the linear drive (2).

9. Rotary linear unit according to any of claims 4 to 8, characterized in that the output shaft (23) of the swinging vane motor (3) is pivotably mounted radially outwards relative to the housing of the unit (1), in the area of the axial guidance arrangement (56).

10. Rotary linear unit according to any of claims 1 to 9, characterized in that the linear drive (2) is fluid-actuated, with the output member (5) comprising an output piston (7) mounted in the housing (8) of the linear drive (2) and in particular capable of being acted upon by fluid from either side.

11. Rotary linear unit according to claim 10, characterized in that, provided in the area of the front end wall (44) of the linear drive (2) is a pivotably-mounted bearing sleeve (52), which is penetrated with axial sliding capability by the output member (5) and with an inner side facing the operating piston (7) against which the latter can strike on reaching the assigned end position.

12. Rotary linear unit according to claim 10 or 11, characterized in that, provided in the intermediate area between the linear drive (2) and the swinging vane motor (3) on the housing side are means of connection (14, 14') which lead via internal channels (13,13') to the housing spaces (9, 9') of the linear drive (2) separated from the operating piston (7) and which facilitate the connection of external pressure lines.

13. Rotary linear unit according to claim 12, characterized in that the fluidic means of connection (14,14') of the linear drive (2) are provided in the vicinity of the fluidic means of connection (38, 38') of the swinging vane motor (3).

14. Rotary linear unit according to any of claims 1 to 13, characterized in that the linear drive (2) and the swinging vane motor (3) are operable independently of one another.

## Revendications

1. Unité de rotation-translation, sur la face avant (16) de laquelle sort la section utile (15) d'une partie menée (5), qui peut être entraînée à la fois en mouvement de rotation autour de son axe longitudinal (17) et en mouvement de translation dans la direction de son axe longitudinal (17) au moyen d'un entraînement rotatif (4) formé par un moteur à pales variables actionnable par un fluide et d'un entraînement linéaire (2), l'entraînement rotatif (4) et l'entraînement linéaire (2) étant placés l'un derrière l'autre dans la direction de l'axe longitudinal (17) de la partie menée (5), de telle manière que l'entraînement rotatif (4) est associé à la face arrière (22) de l'unité (1) et l'entraînement linéaire (2) se trouve dans le sens axial entre l'entraînement rotatif (4) et la section utile (15) de la partie menée (5), caractérisée en ce que, du côté du moteur à pales variables (3) opposé à l'entraînement linéaire (2), il est prévu un dispositif (25) de réglage de l'angle de rotation, qui travaille en dehors de la chambres à pales (27) contenant les pales variables (28) du moteur à pales variables (3), entre le boîtier (26) du moteur à pales variables (3) et son arbre de sortie (23).

2. Unité de rotation-translation selon la revendication 1, caractérisée en ce que la partie menée (5) traverse dans le sens axial l'entraînement rotatif (2) et se loge par une section d'entraînement rotatif (49) dans un évidement de palier (48) de l'arbre de sortie (23) du moteur à pales variables (3), la section d'entraînement rotatif (49) étant montée immobile en rotation et mobile dans le sens axial par rapport à l'arbre de sortie (23).

3. Unité de rotation-translation selon la revendication 2, caractérisée en ce que l'arbre de sortie (23) est conformé en arbre creux (47), dont le passage central forme l'évidement de palier (48).

4. Unité de rotation-translation selon la revendication 2 ou 3, caractérisée en ce que la section d'entraînement rotatif (49) possède un contour extérieur non circulaire et est entourée d'un dispositif de guidage axial (56) de contour intérieur complémentaire, dispositif qui est monté fixe par rapport à l'arbre mené et sert simultanément de dispositif d'entraînement en rotation (60) entre l'arbre de sortie (23) et la partie menée (5).

5. Unité de rotation-translation selon la revendication 4, caractérisée en ce qu'au moins la section d'entraînement rotatif (49) de la partie menée (5) possède un contour carré, le contour intérieur du dispositif de guidage axial (56) étant conformé de manière correspondante.

6. Unité de rotation-translation selon l'une des revendications 2 à 5, caractérisée en ce que la partie menée (5) comporte une tige menée (56) continue dans le sens axial, qui forme à une extrémité la section utile (15) et à l'autre extrémité la section d'entraînement rotatif (49) et qui est conformée en particulier en tige quadrangulaire.

7. Unité de rotation-translation selon l'une des revendications 3 à 6, caractérisée en ce que la partie menée (5) présente une ouverture continue dans le sens axial (63), qui est accessible depuis l'arrière (22) de l'unité (1).

8. Unité de rotation-translation selon l'une des revendications 1 à 7, caractérisée en ce que la partie menée (5) est montée mobile de manière linéaire et en rotation dans la zone de traversée de la paroi de fermeture avant (44) du boîtier (8) de l'entraînement linéaire (2).

9. Unité de rotation-translation selon l'une des revendications 4 à 8, caractérisée en ce que l'arbre de sortie (23) du moteur à pales variables (3) est guidé en rotation au niveau du dispositif de guidage axial (56), à l'extérieur dans le sens radial par rapport au boîtier de l'unité (1).

10. Unité de rotation-translation selon l'une des revendications 1 à 9, caractérisée en ce que l'entraînement linéaire (2) est actionné par un fluide, la partie menée (5) comprenant un piston mené (7) placé à l'intérieur du boîtier (8) de l'entraînement linéaire (2) et qui peut en particulier être exposé à un fluide sur ses deux côtés.

11. Unité de rotation-translation selon la revendication 10, caractérisée en ce qu'au niveau de la paroi de fermeture avant (44) de l'entraînement linéaire (2), il est prévu une douille de palier (52) montée rotative, qui est traversée par la partie menée (5) de manière mobile dans le sens axial, et sur la face intérieure, tournée vers le piston mené (7), de laquelle le piston mené (7) peut buter lorsqu'il atteint la position de fin de course associée.

12. Unité de rotation-translation selon la revendication 10 ou 11, caractérisée en ce que, dans la zone intermédiaire entre l'entraînement linéaire (2) et le moteur à pales variables (3), des moyens de raccordement (14, 14') sont prévus du côté du boîtier, qui mènent par des canaux internes (13, 13') aux volumes intérieurs du boîtier (9,9') de l'entraînement linéaire (2) séparés par le piston mené (7) et permettent le raccordement de conduits externes d'agent sous pression.

13. Unité de rotation-translation selon la revendication 12, caractérisée en ce que les moyens de raccordement de fluide (14, 14') de l'entraînement linéaire (2) sont prévus au voisinage des moyens de raccordement de fluide (38, 38') du moteur à pales variables (3).

14. Unité de rotation-translation selon l'une des revendications 1 à 13, caractérisée en ce que l'entraînement linéaire (2) et le moteur à pales variables (3) peuvent être actionnés indépendamment l'un de l'autre.
